# EUROPEAN PATENT APPLICATION

(11) **EP 3 241 729 A1**
(43) Date of publication of application: **08.11.2017**
(21) Application number: 17162256.6
(22) Date of filing: 22.03.2017
(51) Int. Cl.: B62L 3/08, B60T 8/1766, B60T 8/24, B60T 8/26

(54) **VARIABLE LINKED BRAKING SYSTEM CONTROLLED BY MOTORCYCLE LEAN ANGLE**

(30) Priority: 03.05.2016 TW 105113701
(71) Applicant: Motive Power Industry Co., Ltd., Dacun Township, Changhua County 515 (TW)
(72) Inventor: CHENG, KAI-WEN, Taiwan (R.O.C.) (TW)
(74) Representative: Rapisardi, Mariacristina

(57) **Abstract**

A variable linked braking system controlled by motorcycle lean angle includes a brake master cylinder; a hydraulic pressure proportion variable valve connected to the brake master cylinder; a front brake unit and a rear brake unit, both connected to the hydraulic pressure proportion variable valve; a hydraulic pressure proportion controller for controlling the hydraulic pressure proportion variable valve; a motorcycle lean angle sensor for sensing a motorcycle lean angle and sending a signal thereof to the hydraulic pressure proportion controller; and a brake switch for starting the brake master cylinder and sending a brake signal to the hydraulic pressure proportion controller for controlling the hydraulic pressure proportion variable valve so that the braking force ratio of the front brake unit to the rear brake unit decreases as the motorcycle lean angle increases, thereby enhancing the stability and traction of a motorcycle being braked in a turn.

## Description

### FIELD OF THE INVENTION

The present invention relates to variable linked braking systems controlled by motorcycle lean angle and, more particularly, to a variable linked braking system controlled by motorcycle lean angle to enhance the stability and traction of a motorcycle being braked in a turn.

### BACKGROUND OF THE INVENTION

Motorcycles, deemed an important means of transport in some countries, come with safety components, namely a front brake and a rear brake. In general, the front brake is controlled by the right brake handle, whereas the rear brake is controlled by the left brake handle. However, in case of emergency, the rider may not operate the right brake handle or left brake handle properly, and in consequence the motorcycle may fall over. Furthermore, when being braked and turned, a motorcycle capable of linked braking is likely to have its stability and traction compromised by an inappropriate proportion of a front braking force to a rear braking force.

Therefore, it is important to provide a variable linked braking system controlled by motorcycle lean angle so as to enhance the stability and traction of a motorcycle being braked in a turn.

### SUMMARY OF THE INVENTION

In view of the aforesaid drawbacks of the prior art, it is an objective of the present invention to provide a variable linked braking system controlled by motorcycle lean angle to enhance the stability and traction of a motorcycle being braked in a turn.

In order to achieve the above and other objectives, the present invention provides a variable linked braking system controlled by motorcycle lean angle, comprising: a brake master cylinder; a hydraulic pressure proportion variable valve connected to the brake master cylinder by an oil path; a front brake unit connected to the hydraulic pressure proportion variable valve by a first oil path; a rear brake unit connected to the hydraulic pressure proportion variable valve by a second oil path; a hydraulic pressure proportion controller for controlling a hydraulic pressure distribution proportion of the hydraulic pressure proportion variable valve; a motorcycle lean angle sensor for sensing a motorcycle lean angle, converting the sensed motorcycle lean angle into a lean angle signal, and sending the lean angle signal to the hydraulic pressure proportion controller; and a brake switch for starting the brake master cylinder and sending a brake signal to the hydraulic pressure proportion controller, the hydraulic pressure proportion controller controlling the hydraulic pressure distribution proportion of the hydraulic pressure proportion variable valve so that, given a motorcycle speed larger than 0, a ratio of a braking force of the front brake unit to a braking force of the rear brake unit decreases as the motorcycle lean angle increases, wherein the ratio decreases to one of 2/8 and 4/6 as the motorcycle lean angle increases, wherein the ratio decreases to one of 1/9 and 2/8 as the motorcycle lean angle increases, wherein the ratio decreases to one of 0/10 and 1/9 as the motorcycle lean angle increases.

Regarding the variable linked braking system controlled by motorcycle lean angle, the front brake unit is front brake calipers, and the rear brake unit is rear brake calipers.

Regarding the variable linked braking system controlled by motorcycle lean angle, the ratio decreases to 0 or larger than 0 as the motorcycle lean angle increases.

Regarding the variable linked braking system controlled by motorcycle lean angle, the ratio decreases to 2/8 or 4/6 as the motorcycle lean angle increases, or the ratio decreases to 1/9 or 2/8 as the motorcycle lean angle increases; or the ratio decreases to 0/10 or 1/9 as the motorcycle lean angle increases.

Regarding the variable linked braking system controlled by motorcycle lean angle, the ratio decreases from 3/7, 4/6, 5/5 or 6/4 as the motorcycle lean angle increases, or the ratio decreases from 5/5, 6/4 or 7/3 as the motorcycle lean angle increases.

Regarding the variable linked braking system controlled by motorcycle lean angle, with the motorcycle lean angle increasing from 0 degree to 10 degrees, the ratio decreases to 2/8 or 4/6 as the motorcycle lean angle increases; or with the motorcycle lean angle increasing from 0 degree to 20 degrees, the ratio decreases to 1/9 or 2/8 as the motorcycle lean angle increases; with the motorcycle lean angle increasing from 0 degree to 30 degrees, the ratio decreases to 0/10 or 1/9 as the motorcycle lean angle increases.

Regarding the variable linked braking system controlled by motorcycle lean angle, the ratio decreases linearly, continuously as the motorcycle lean angle increases.

Regarding the variable linked braking system controlled by motorcycle lean angle, the ratio decreases stepwise as the motorcycle lean angle increases.

Hence, according to the present invention, the variable linked braking system controlled by motorcycle lean angle enhances the stability and traction of a motorcycle being braked in a turn.

### BRIEF DESCRIPTION OF THE DRAWINGS

Objectives, features, and advantages of the present invention are hereunder illustrated with specific embodiments in conjunction with the accompanying drawings, in which:
FIG. 1 is a block diagram of a variable linked braking system controlled by motorcycle lean angle according to a preferred embodiment of the present invention;
FIG. 2 is a schematic view of the motorcycle lean angle according to the preferred embodiment of the present invention;
FIG. 3A is the first graph of the ratio versus motorcycle lean angle according to the preferred embodiment of the present invention;
FIG. 3B is the second graph of the ratio versus motorcycle lean angle according to the preferred embodiment of the present invention;
FIG. 4A is the third graph of the ratio versus motorcycle lean angle according to the preferred embodiment of the present invention; and
FIG. 4B is the fourth graph of the ratio versus motorcycle lean angle according to the preferred embodiment of the present invention.

### DETAILED DESCRIPTION OF THE PREFERRED EMBODIMENTS

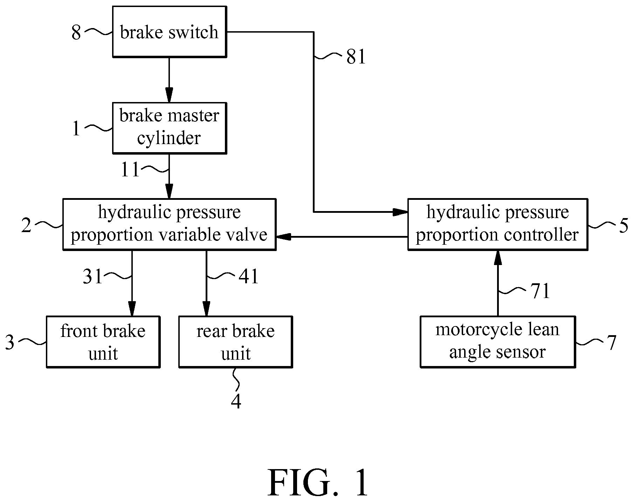

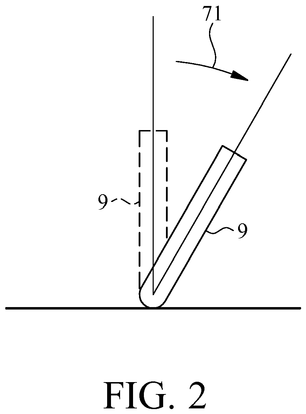

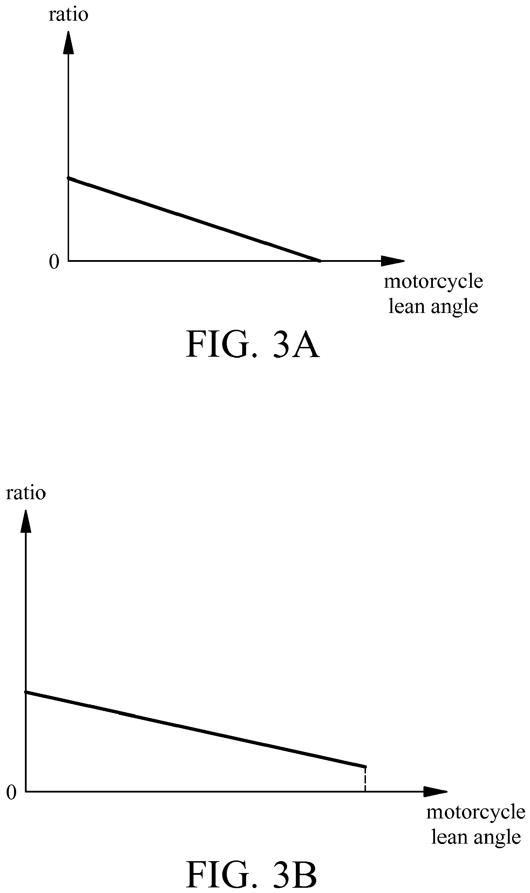

Referring to FIG. 1 through FIG. 4B, the present invention provides a variable linked braking system controlled by motorcycle lean angle. The variable linked braking system comprises a brake master cylinder 1, a hydraulic pressure proportion variable valve 2, a front brake unit 3, a rear brake unit 4, a hydraulic pressure proportion controller 5, a motorcycle lean angle sensor 7, and a brake switch 8. The hydraulic pressure proportion variable valve 2, electronically or mechanically operated, is connected to the brake master cylinder 1 by an oil path 11 to distribute the hydraulic pressure generated from the brake master cylinder 1 on the front brake unit 3 and the rear brake unit 4. The front brake unit 3 is provided in the form of front brake calipers and connected to the hydraulic pressure proportion variable valve 2 by a first oil path 31. The rear brake unit 4 is provided in the form of rear brake calipers and connected to the hydraulic pressure proportion variable valve 2 by a second oil path 41. The hydraulic pressure proportion controller 5 has a computation processor (not shown), a servomotor (not shown) controlled by the computation processor, a memory (not shown) connected to the computation processor, and a power source (not shown). The hydraulic pressure proportion controller 5 uses the computation processor, or the computation processor and the servomotor, to control the hydraulic pressure proportion variable valve 2 so as to change the hydraulic pressure distribution proportion of the hydraulic pressure proportion variable valve 2. The motorcycle lean angle sensor 7 senses a motorcycle lean angle 71 to the hydraulic pressure proportion controller 5. The motorcycle lean angle 71 is the angle by which a motorcycle 9 leans to one side. The brake switch 8 is provided in the form of a brake handle and adapted to start the brake master cylinder 1 and send a brake signal 81 to the hydraulic pressure proportion controller 5. The hydraulic pressure proportion controller 5 controls, according to the motorcycle lean angle 71, the hydraulic pressure proportion variable valve 2 to change the hydraulic pressure distribution proportion of the hydraulic pressure proportion variable valve 2 so that, given a motorcycle speed larger than 0, the ratio of the braking force of the front brake unit 3 to the braking force of the rear brake unit 4 decreases to 0 or larger than 0 as the motorcycle lean angle 71 increases (from 0 degree, 5 degrees, 10 degrees, 15 degrees, 20 degrees, and the like.) In addition to a linear relationship (shown in FIG. 3A through FIG. 3B), the relationship between the motorcycle lean angle 71 and the ratio is depicted with a curve so that the brake switch 8 generates the ratio of a hydraulic pressure distribution as soon as the brake switch 8 sends the brake signal 81 to the hydraulic pressure proportion controller 5, thereby allowing the hydraulic pressure proportion variable valve 2 to appropriately distribute the hydraulic pressure on the front brake unit 3 and the rear brake unit 4. For example, where the brake master cylinder 1 provides a total braking force of 10 units, with the brake switch 8 being the left brake handle, the front brake unit 3 being front brake calipers, and the rear brake unit 4 being rear brake calipers, the ratio decreases from 3/7, 4/6, 5/5 or 6/4 to 2/8 as the motorcycle lean angle 71 increases from 0 degree to 10 degrees, the ratio decreases from 3/7, 4/6, 5/5 or 6/4 to 1/9 as the motorcycle lean angle 71 increases from 0 degree to 20 degrees, and the ratio decreases from 3/7, 4/6, 5/5 or 6/4 to 0/10 as the motorcycle lean angle 71 increases from 0 degree to 30 degrees, wherein the ratio 3/7 corresponds to a motorcycle speed of 30km/h, the ratio 4/6 corresponds to a motorcycle speed of 60km/h, the ratio 5/5 corresponds to a motorcycle speed of 90km/h, and the ratio 6/4 corresponds to a motorcycle speed of at least 90km/h. In another exemplary instance, where the brake master cylinder 1 provides a total braking force of 10 units, with the brake switch 8 being the right brake handle, the front brake unit 3 being front brake calipers, and the rear brake unit 4 being rear brake calipers, the ratio decreases from 5/5, 6/4 or 7/3 to 4/6 as the motorcycle lean angle 71 increases from 0 degree to 10 degrees, the ratio decreases from 5/5, 6/4 or 7/3 to 2/8 as the motorcycle lean angle 71 increases from 0 degree to 20 degrees, and the ratio decreases from 5/5, 6/4 or 7/3 to 1/9 as the motorcycle lean angle 71 increases from 0 degree to 30 degrees, wherein, the ratio 5/5 corresponds to a motorcycle speed of 30km/h, the ratio 6/4 corresponds to a motorcycle speed of 60km/h, and the ratio 7/3 corresponds to a motorcycle speed of at least 90km/h.

According to the present invention, the variable linked braking system controlled by motorcycle lean angle determines a ratio that matches a motorcycle lean angle 71 in accordance with the linear or curve relationship between the motorcycle lean angle 71 and the ratio, so as to distribute the braking force on the front brake unit 3 and the rear brake unit 4 appropriately, thereby enhancing the stability and traction of a motorcycle being braked in a turn.

Referring to FIG. 3A and FIG. 3B, the variable linked braking system controlled by motorcycle lean angle is characterized in that the ratio decreases linearly, continuously as the motorcycle lean angle 71 increases.

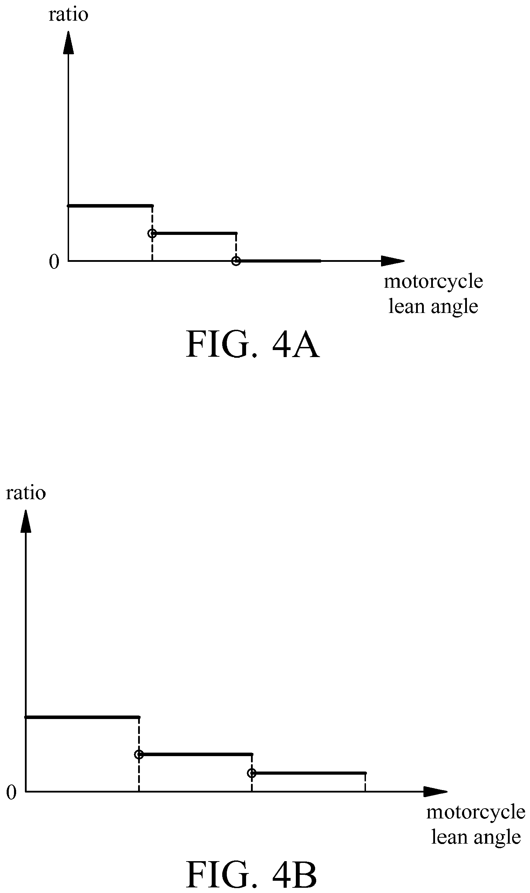

Referring to FIG. 4A and FIG. 4B, the variable linked braking system controlled by motorcycle lean angle is characterized in that the ratio decreases stepwise as the motorcycle lean angle 71 increases.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

What is claimed is:
A variable linked braking system controlled by motorcycle lean angle, comprising:
   a brake master cylinder;
   a hydraulic pressure proportion variable valve connected to the brake master cylinder by an oil path;
   a front brake unit connected to the hydraulic pressure proportion variable valve by a first oil path;
   a rear brake unit connected to the hydraulic pressure proportion variable valve by a second oil path;
   a hydraulic pressure proportion controller for controlling a hydraulic pressure distribution proportion of the hydraulic pressure proportion variable valve;
   a motorcycle lean angle sensor for sensing a motorcycle lean angle, converting the sensed motorcycle lean angle into a lean angle signal, and sending the lean angle signal to the hydraulic pressure proportion controller; and
   a brake switch for starting the brake master cylinder and sending a brake signal to the hydraulic pressure proportion controller, the hydraulic pressure proportion controller controlling the hydraulic pressure distribution proportion of the hydraulic pressure proportion variable valve so that, given a motorcycle speed larger than 0, a ratio of a braking force of the front brake unit to a braking force of the rear brake unit decreases as the motorcycle lean angle increases.

## Claims

1. The variable linked braking system controlled by motorcycle lean angle in accordance with claim 1, wherein the front brake unit is front brake calipers, and the rear brake unit is rear brake calipers.

2. The variable linked braking system controlled by motorcycle lean angle in accordance with claim 1, wherein the ratio decreases to 0 or larger than 0 as the motorcycle lean angle increases.

3. The variable linked braking system controlled by motorcycle lean angle in accordance with claim 1, wherein the ratio decreases to one of 2/8 and 4/6 as the motorcycle lean angle increases, the ratio decreases to one of 1/9 and 2/8 as the motorcycle lean angle increases, and the ratio decreases to one of 0/10 and 1/9 as the motorcycle lean angle increases.

4. The variable linked braking system controlled by motorcycle lean angle in accordance with claim 1, wherein the ratio decreases from one of 3/7, 4/6, 5/5 and 6/4 as the motorcycle lean angle increases, and the ratio decreases from one of 5/5, 6/4 and 7/3 as the motorcycle lean angle increases.

5. The variable linked braking system controlled by motorcycle lean angle in accordance with claim 1, wherein the ratio decreases to one of 2/8 and 4/6 as the motorcycle lean angle increases from 0 degree to 10 degrees, the ratio decreases to one of 1/9 and 2/8 as the motorcycle lean angle increases from 0 degree to 20 degrees, and the ratio decreases to one of 0/10 and 1/9 as the motorcycle lean angle increases from 0 degree to 30 degrees.

6. The variable linked braking system controlled by motorcycle lean angle in accordance with claim 1, wherein the ratio decreases continuously as the motorcycle lean angle increases.

7. The variable linked braking system controlled by motorcycle lean angle in accordance with claim 1, wherein the ratio decreases stepwise as the motorcycle lean angle increases.
